# EUROPEAN PATENT APPLICATION

(11) **EP 4 726 388 A1**
(43) Date of publication of application: **15.04.2026**
(21) Application number: 25207824.1
(22) Date of filing: 09.10.2025
(51) Int. Cl.: G01N 30/16, G01N 30/18, G01N 30/30, G01N 30/54, G01N 30/88

(54) **INLET FOR GAS CHROMATOGRAPHY**

(30) Priority: 10.10.2024 US 202418912372
(71) Applicant: Separation Systems, Inc., Gulf Breeze, FL 32561 (US)
(72) Inventor: LUBKOWITZ, Joaquin, deceased (US)
(74) Representative: Mewburn Ellis LLP

(57) **Abstract**

Certain aspects of the present disclosure may include an inlet for a gas chromatography system, including a septum plunger configured to: receive a sample material including a solvent and an analyte; and prevent the received sample material from being exposed to an environment outside the inlet; a liner configured to: be disposed in a stem of the inlet making a tight connection with the column; and receive the sample material via the septum plunger; the stem configured to be disposed inside a heater block; and the heater block including: an angled ventilation port; a plurality of air holes; an stem opening configured to receive the stem; a heater opening configured to receive a heater; and a sensor opening configured to receive a temperature sensor.

## Description

### CROSS-REFERENCE TO RELATED APPLICATIONS

The current application claims priority to, and the benefit of, United States Patent Application No. 18/912,372 filed October 10, 2024 and entitled "METHODS AND APPARATUSES FOR GAS CHROMATOGRAPHY".

### TECHNICAL FIELD

Aspects of the present disclosure relate to gas chromatography.

### BACKGROUND

In a gas chromatography system, a liquid sample is injected into a column by a syringe. The sample is heated to one or more desired temperatures. During the heating process, one or more sample materials in the liquid sample may transition from the liquid phase to the gaseous phase. A carrier gas, which is selected to not chemically react with the one or more gaseous sample materials, may be blown into the column to carry the gaseous sample materials toward a detector. The sample travels through the column where multiple solid phase -gas phase equilibria occur. Different molecules travel through the column at different linear velocity. Thus components are separated and emerge from the column to be detected by the detector. The profile of the sample through the liner must such as not change the sample profile while traveling through the liner. The one or more gaseous sample materials may have different vapor pressures at different temperatures (e.g., boiling points), which allows for the separation of the gaseous sample materials based on the temperature inside the column. The detector, such as a mass spectrometer, may ionize the gaseous sample materials and identify one or more properties of the sample materials (e.g., molecular weight). Other detectors may also be used (e.g., ionization detector, thermal conductivity detector, etc.). Therefore, improvements may be desirable.

### SUMMARY

This summary is provided to introduce a selection of concepts in a simplified form that are further described below in the DETAILED DESCRIPTION. This summary is not intended to identify key features of the claimed subject matter, nor is it intended to be used as an aid in determining the scope of the claimed subject matter.

Certain aspects of the present disclosure may include an inlet for a gas chromatography system, including a septum plunger configured to: receive a sample material including a solvent and an analyte; and prevent the received sample material from being exposed to an environment outside the inlet; a liner configured to: be disposed in a stem of the inlet; and receive the sample material via the septum plunger; the liner being connected to column, the stem configured to be disposed inside a heater block; and the heater block including: an angled ventilation port; a plurality of air holes; an stem opening configured to receive the stem; a heater opening configured to receive a heater; and a sensor opening configured to receive a temperature sensor.

### BRIEF DESCRIPTION OF THE DRAWINGS

The features believed to be characteristic of aspects of the disclosure are set forth in the appended claims. In the description that follows, like parts are marked throughout the specification and drawings with the same numerals, respectively. The drawing figures are not necessarily drawn to scale and certain figures may be shown in exaggerated or generalized form in the interest of clarity and conciseness. The disclosure itself, however, as well as a preferred mode of use, further objects and advantages thereof, will be best understood by reference to the following detailed description of illustrative aspects of the disclosure when read in conjunction with the accompanying drawings, wherein:
FIG. 1 illustrates an exploded view of an example of an inlet in accordance with aspects of the present disclosure;
FIG. 2 illustrates a cross sectional view of an example of a septum plunger in accordance with aspects of the present disclosure;
FIG. 3 illustrates a side view of an example of a liner and a cross sectional view of an example of a stem in accordance with aspects of the present disclosure;
FIG. 4A-D illustrate various views of an example of a heater block in accordance with aspects of the present disclosure;
FIG. 5 illustrates an example of a heater controller in accordance with aspects of the present disclosure;
FIG. 6 illustrates an example of an interface between the liner and a column of the gas chromatography system in accordance with aspects of the present disclosure; and
FIG. 7 illustrates an example of a gas chromatography system in accordance with aspects of the present disclosure.

### DETAILED DESCRIPTION

The following includes definitions of selected terms employed herein. The definitions include various examples and/or forms of components that fall within the scope of a term and that may be used for implementation. The examples are not intended to be limiting.

In an aspect of the present disclosure, a gas chromatography system may be used analyze the composition of a liquid sample, such as crude oil. Specifically, the liquid sample may be progressively heated from a first temperature to a second temperature higher than the first temperature. As the liquid sample is heated, various component materials in the liquid sample may evaporate, and the carrier gas in the chromatography system may carry the evaporated liquid sample (which boils at a specific temperature) to a detector. Based on the different vapor pressure of the component materials, a boiling point distribution for the particular liquid sample may be obtained.

Crude oil typically includes asphalt and a variety of hydrocarbons that may be refined into commercial fuel, such as gasoline. In order to dilute crude oil for use as a sample in a gas chromatography, a solvent may be used, such as carbon disulfide. The dilution may range from 1%:99% crude oil:solvent dilution, to 2%:98% crude oil:solvent dilution by volume, or other suitable dilution. The dilution is maintained at such low concentration (of crude oil) because the need to elute compounds that have a high number of carbons (e.g., carbon 100) without obstructing the column. However, in prior methods, dilution at such low concentration may negatively impact reproducibility of the analysis of the crude oil sample.

Aspects of the present disclosure includes an inlet configured to inject an amount of dilution sample to improve reproducibility of the analysis. The inlet according to aspects of the present disclosure may be utilized to deliver sample materials in a gas chromatography system, such as a distillation chromatography system. The inlet may be used for various samples, such as organic materials, preferably selected from crude oil, asphalt, jet fuel, diesel, and gasoline.

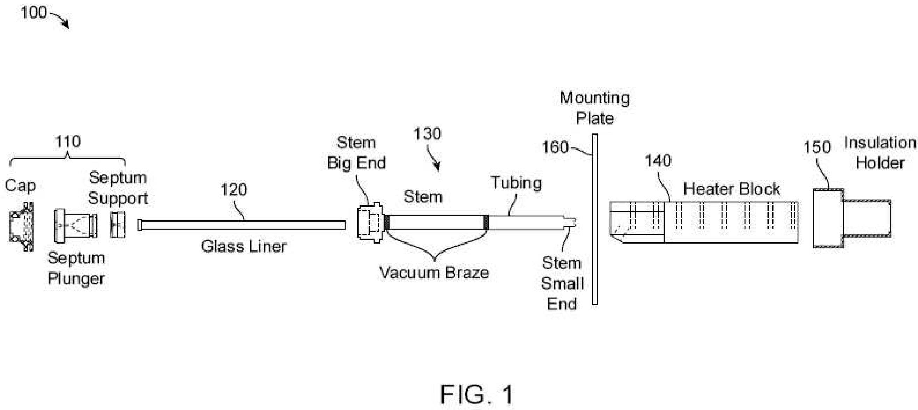

FIG. 1 illustrates an exploded view of an example of an inlet 100 configured to provide a sample according to aspects of the present disclosure. The inlet 100 may include a septum plunger 110 configured to prevent the sample from leaking, i.e. being exposed to an environment outside the inlet. The inlet 100 may include a liner 120, having a distal end, disposed toward the proximal end of the septum plunger, and a proximal end, and configured to provide a flow path for the samples from the septum plunger 110 toward a detector (not shown). The inlet 100 may include a stem 130 disposed toward the proximal end of the septum plunger 110. The inlet 100 may include a heater block 140, configured to contact the stem 130, the heating block optionally provided with conduits for airflow. The inlet 100 may further include a holder 150 configured to hold the inlet 100 onto a mounting plate 160 and/or the detector.

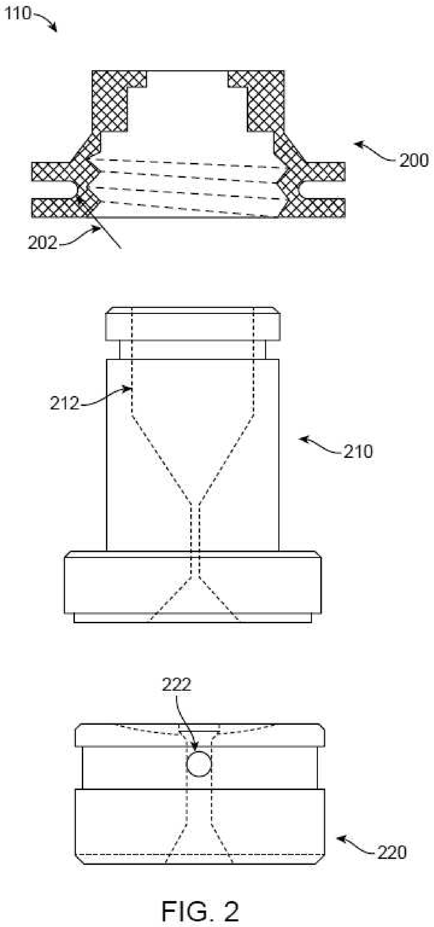

FIG. 2 illustrates an exploded view of an exemplary septum plunger 110 of the inlet 100 shown in FIG. 1. The septum plunger 110 may be configured to separate the sample from the atmosphere. The septum plunger 110 may include a cap 200, a housing 210, and a support 220. The cap 200 may be configured to mate ably couple to the housing 210. In one aspect of the present disclosure, the cap 200 may include female threading 202 configured to couple with male threading on the outer surface of the housing 210.

In some aspects of the present disclosure, the housing 210 may include a fluid channel 212 through the housing 210. The support 220 may include a carrier gas inlet 222 configured to couple to a source for carrier gas for the samples. The support 220 may be configured to contact the distal end of the liner 120 (FIG. 1), for example such that the proximal end of the liner 120 may be inserted into the stem 130 (FIG. 1) as described below. The septum plunger 110 or any of its components (such as the cap 200, the housing 210, and/or the support 220) may be mateably coupled to the stem 130 (FIG. 1).

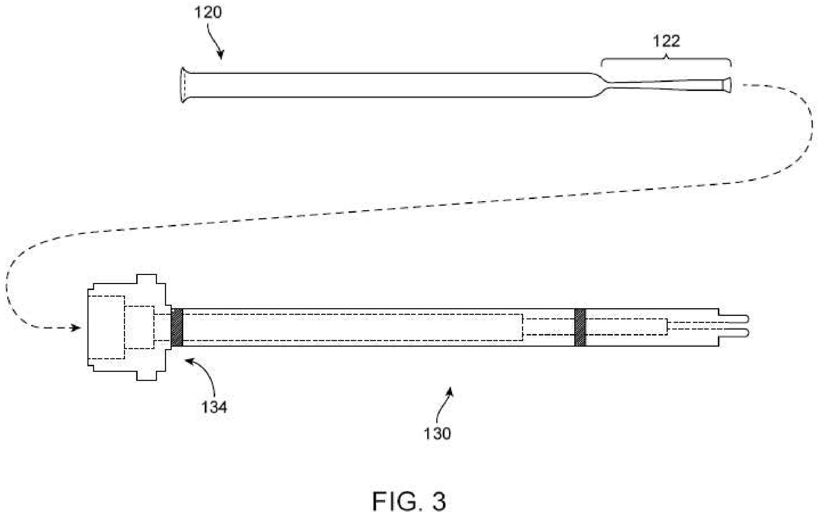

FIG. 3 illustrates an example of the liner 120 and a cross sectional view of the stem 130 of the inlet 100 according to aspects of the present disclosure. The liner 120 may be configured to be inserted into the stem 130. In one aspect of the present disclosure, the septum plunger 110 may hold the liner 120 while inserting into the stem 130. The liner 120 may include a narrowing portion 122 configured to control how far a column of the gas chromatography system (not shown) is to be inserter into the liner 120. The column may be configured to couple to the liner 120 via the narrowing portion 122.

In one aspect of the present disclosure, the liner 120 may be made from glass (e.g., borosilicate, quartz, etc.). An example of the liner 120 may have an inner diameter of 1.7 millimeter (mm) and an outer diameter of 3.0 mm. The liner may have a total volume of 150-300 mm³, 100-400 mm³, 200-250 mm³, etc., and/or is capable to contain the expanded sample. In one example, the liner may have a total volume of 230 mm³. In some instances, the liner 120 may have an inner diameter in the range of 1 to 3 mm. The liner 120 may have an outer diameter in the range of 2 to 4 mm. The length of the liner 120 may be 9 centimeters (cm) or longer. In certain aspects, the length of the liner 120 may be in the range of 5 cm to 15 cm. An aspect of the present disclosure may include having a liner 120 being 9 cm or longer such that, during operation, the solvent in the sample is less likely to evaporate prematurely, leaving the insoluble compounds in the sample behind (e.g., asphalt).

In one aspect of the present disclosure, the stem 130 may include a device, such as a disc, placed towards the distal end, for example at a neck region 134, of the stem 130 configured to reduce heat transfer between the stem 130 and the septum plunger 110. The reduction of heat transfer may minimize septum leak (also known as septum bleed) during the heating of the stem 130. In some aspects, the device may comprise ceramic, thermoplastic, composite materials, or other suitable materials. The device may be held by a stainless steel disc.

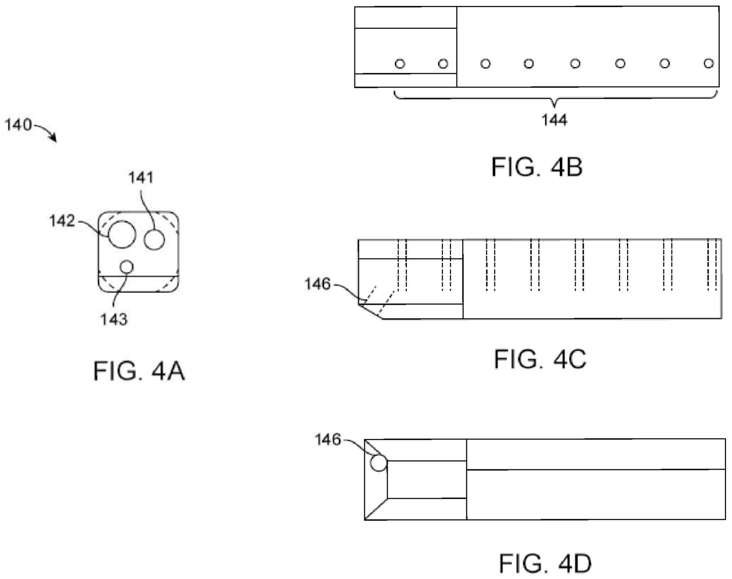

FIGs. 4A-D illustrate an example of the heater block 140 according to aspects of the present disclosure. FIG. 4A shows a front view of the heater block 140. The heater block 140 includes a stem opening 141 configured to receive the proximal end of stem 130 (FIG. 3) into the heater block 140. The heater block 140 may include a heater opening 142 configured to receive a heater (shown below) into the heater block 140. The heater may be configured to heat the stem 130 and/or the heater block 140. The heater block 140 may include a sensor opening 143 configured to receive a temperature sensor (not shown), such as a thermocouple, into the heater block 140. The sensor may provide feedback to the heater for the heater to control the temperature of the heater block 140.

FIG. 4B shows a side view of the heater block 140. In some aspects of the present disclosure, the heater block 140 includes a plurality of air holes 144 configured to provide ventilation to cool the heater block 140 and/or the stem 130 when inserted into the heater block 140.

FIG. 4C shows a side cross sectional view of the heater block 140 and FIG. 4D shows a bottom view of the heater block 140. The heater block 140 may include a ventilation port 146 configured to receive fluid to cool the heater block 140. The ventilation port 146 may be disposed at an angle with respect to the top surface of the heater block 140. For example, the ventilation port 146 may be disposed at an angle of 15°, 20°, 30°, 45°, 60°, or other suitable angles. The ventilation port 146 may provide a path for a cooling fluid (e.g., air, coolant, etc.) to enter into the heater block 140. In one aspect of the present disclosure, the cooling fluid may enter into the heater block 140 and create a vortex to cool the heater block 140.

Referring to FIGs. 1-4D, in some aspects of the present disclosure, the inlet 100 may be used for providing samples for a gas chromatography analysis. During operation, an operator (not shown) may couple the septum plunger 110 to the liner 120. The operator may place the sample (including solvent and analyte) into the liner 120. In one instance, the operator may inject the sample through the septum plunger 110 into the liner 120. In other instances, the operator may directly pour the sample into the liner 120.

In some aspects of the present disclosure, after the sample has been injected into the liner 120, the heater (shown below) may heat the heater block 140 of the inlet 100 to a higher temperature than the column (not shown) used in the gas chromatography. In other words, as the column is heated in an oven to a temperature t₁ at time T₁, the heater already heated the heater block 140 to a temperature t₂ at the time T₁, where t₂ is higher than t₁.

In certain aspects of the present disclosure, the heated sample may exit the inlet 100 and enter a gas chromatography system to be analyzed.

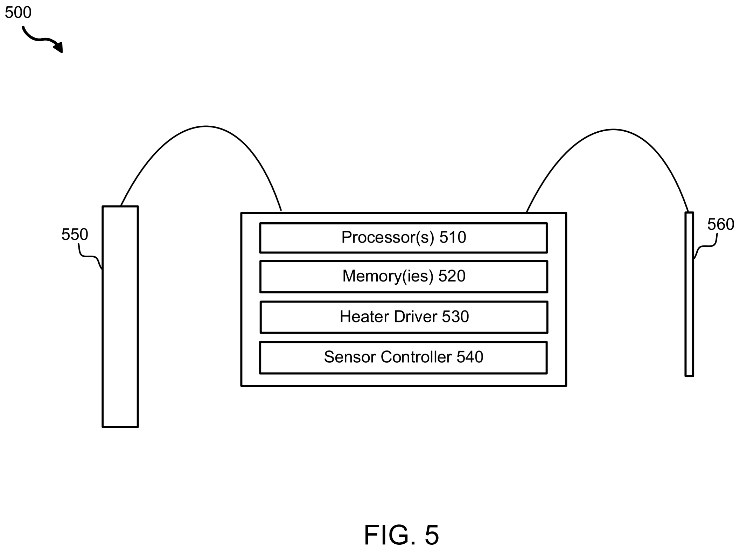

FIG. 5 illustrates an example of a heater system 500 according to aspects of the present disclosure. The heater system 500 may include one or more processors 510 configured to execute instructions in one or more memories 520. The heater system 500 may include one or memories 520 configured to store computer readable instructions. The heater system 500 may include a heater driver 530 configured to provide electrical energy to a heater 550. The heater system 500 may include a sensor controller 540 configured to measure signals from a temperature sensor 560. The heater system 500 may include the heater 550 configured to heat a device, such as the heater block 140 (FIGs. 4A-D). The heater system 500 may include the sensor 560 configured to measure a temperature of the device, such as the heater block 140.

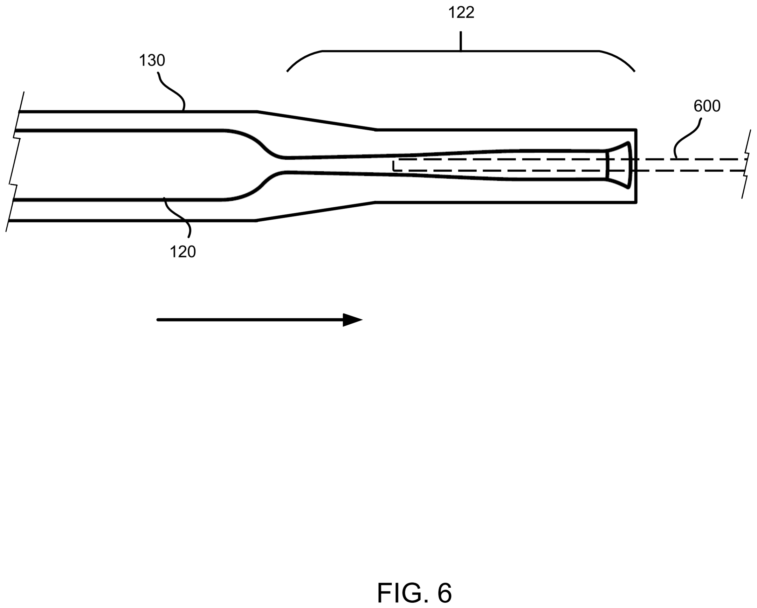

FIG. 6 illustrates an example of an interface between the liner 120 and a column 600 of the gas chromatography system (not shown). Referring to FIGs. 1, 3, and 6, the liner 120 may be disposed in the stem 130 of the inlet 100. The liner 120 may include the narrowing portion 122 configured to receive the column from the gas chromatography system. The column 600 may be configured to be inserted into the narrowing portion 122 of the liner 120. In one aspect of the present disclosure, the column 600 may be configured to be inserted into a portion of the narrowing portion 122, stopping by the constriction of the narrowing portion 122. A seal is made at the constriction where the column 600 is unable to be inserted further into the narrowing portion 122. In FIG. 6, the sample vapor flows from insider the liner 120 into the column 600 for analysis by the gas chromatography system.

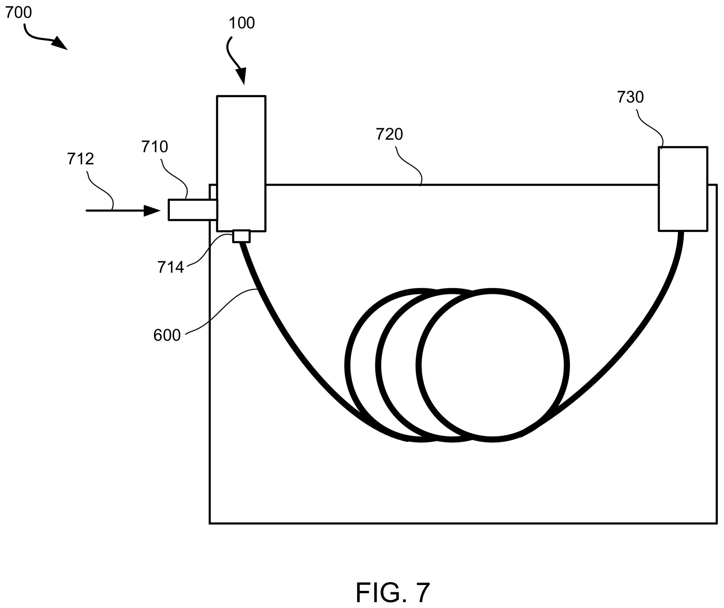

FIG. 7 illustrates an example of a gas chromatography system according to aspects of the present disclosure. Referring to FIGs. 1, 3, 6, and 7, a gas chromatography system 700 may include the inlet 100 configured to provide sample vapor. The gas chromatography system 700 may include a carrier inlet 710 configured to receive a carrier gas 712. The carrier gas 712 may be mixed with the sample vapor to carry the sample vapor toward the column 600. The column 600 may be connected to the inlet 100 via a nut 714. The nut 714 may be made from a number of materials, including one or more of metal, composite, alloy, ceramic, thermal plastic, glass, or other suitable materials. In one aspect, the nut 714 may be made with a graphite ferrule to prevent leaks at the junction of the inlet 100 and the column 600.

In some aspects of the present disclosure, the gas chromatography system 700 may include an oven 720 configured to heat the mixed sample (carrier gas 712 and sample vapor). The gas chromatography system 700 may include a detector 730 configured to detect materials evaporated in the column 600 due to heating by the oven 720.

It will be appreciated that various implementations of the above-disclosed and other features and functions, or alternatives or varieties thereof, may be desirably combined into many other different systems or applications. Also that various presently unforeseen or unanticipated alternatives, modifications, variations, or improvements therein may be subsequently made by those skilled in the art which are also intended to be encompassed by the following claims.

## Claims

1. An inlet for a gas chromatography system, comprising:
a septum plunger configured to:
receive a sample material including a solvent and an analyte; and
prevent the received sample material from being exposed to an environment outside the inlet;
a liner configured to:
be disposed in a stem of the inlet; and
receive the sample material via the septum plunger;
at least a portion of the stem configured to be disposed inside a heater block; and
the heater block including:
an angled ventilation port;
a plurality of air holes;
an stem opening configured to receive the stem;
a heater opening configured to receive a heater; and
a sensor opening configured to receive a temperature sensor.

2. The inlet of claim 1, further comprising the heater configured to provide thermal energy to the heater block to heat the sample material.

3. The inlet of claim 1, further comprising one or more discs disposed between the septum plunger and the stem to reduce heat transfer between the septum plunger and the stem.

4. The inlet of claim 3, wherein the one or more discs include a ceramic disc and a stainless steel disc.

5. The inlet of claim 1, wherein the stem is at least 9 centimeter long.

6. The inlet of claim 1, wherein the angled ventilation port is at an angle between 20° and 40° with respect to a top surface of the heater block.

7. The inlet of claim 1, wherein the liner is a glass liner having a narrowing portion configured to prevent a column from extending pass the narrowing portion and making a seal configured to prevent sample vapor from escaping.

8. The inlet of claim 1, wherein the septum plunger include a carrier gas inlet configured to receive a carrier gas that transports the sample material from the inlet to the gas chromatography system.

9. The inlet of claim 1, further comprising an insulation holder configured to couple the inlet to the gas chromatography system.

10. The inlet of claim 1, wherein the plurality of air holes are disposed longitudinally along the heater block.
